# EUROPÄISCHE PATENTANMELDUNG

(11) **EP 1 260 786 A2**
(43) Veröffentlichungstag der Anmeldung: **27.11.2002**
(21) Anmeldenummer: 02010328.9
(22) Anmeldetag: 07.05.2002
(51) Int. Cl.: G01B 5/14, G01B 5/20

(54) **Schraubspindelgetriebe und Läuterbottich-Aufhackmaschine**

(30) Priorität: 23.05.2001 DE 20108680 U
(71) Anmelder: Anton Steinecker Maschinenfabrik GmbH, 85356 Freising-Attaching (DE)
(72) Erfinder: Redl, Simon, 84072 Reichertshausen (DE)
(74) Vertreter: Grünecker, Kinkeldey, Stockmair & Schwanhäusser Anwaltssozietät

(57) **Zusammenfassung**

Die Erfindung betrifft ein Schraubspindelgetriebe, insbesondere für eine Läuterbottich-Aufhackmaschine, mit einer Spindelmutter, die durch eine relative Drehbewegung zwischen der Schraubspindel und der Spindelmutter entlang des Außengewindes der Schraubspindel verstellbar ist. Das Schraubspindelgetriebe ist durch einen in das Schraubspindelgetriebe zwischen der Spindelmutter und der Schraubspindel baulich integrierten Gewindeverschleiß-Anzeigemechanismus ausgezeichnet. Weiterhin betrifft die Erfindung eine Läuterbottich-Aufhackmaschine mit einem Schraubspindelgetriebe, mit dem zwischen einer Spindelmutter und einer ein Außengewinde aufweisenden Schraubspindel durch Relatiwerdrehung axiale Lastverstellbewegungen durchführbar sind, die dadurch ausgezeichnet ist, dass in das Schraubspindelgetriebe ein ohne Demontage des Schraubspindelgetriebes zumindest optisch inspizierbarer, selbsttätiger Gewindeverschleiß-Anzeigemechanismus baulich eingegliedert ist.

## Beschreibung

Die Erfindung betrifft ein Schraubspindelgetriebe gemäß Oberbegriff des Anspruchs 1 und eine Läuterbottich-Aufhackmaschine gemäß Oberbegriff des Anspruchs 7.

In einem Schraubspindelgetriebe tritt Gewindeverschleiß auf, unabhängig davon, ob zwischen der Spindelmutter und der Schraubspindel ein direkter Gewindeeingriff vorhanden ist oder Wälzkörper dazwischen geschaltet sind. Bei einem Schraubspindelgetriebe mit direktem Gewindeeingriff zwischen der Spindelmutter und der Schraubspindel nutzt sich das Innengewinde der Spindelmutter stärker ab als das Außengewinde der Schraubspindel. Da das Innengewinde der Spindelmutter von außen nicht sichtbar ist, muss zur Überprüfung des Gewindeverschleißes das Schraubspindelgetriebe manchmal für Inspektionen mehrfach zerlegt werden, bis ein zumindest den Austausch der Spindelmutter fordernder Gewindeverschleiß feststellbar ist. Dies ist arbeits- und zeitaufwendig, eine unsichere Methode und bedingt unerwünscht häufige und lange Stillstandszeiten für eine das Schraubspindelgetriebe enthaltende Maschine.

Beim Bierbrauen wird sich auf einer Siebplatte absetzender Treber als natürlicher Filter benutzt. Da sich die Treber mit der Zeit verdichten, wird eine Läuterbottich-Aufhackmaschine verwendet, die die abgesetzten Treber schichtweise lockert. Die Lockerungselemente werden langsam rotierend angetrieben und zur Änderung ihrer Eindringtiefe auf- und abverstellt, wofür im Regelfall ein Schraubspindelgetriebe benutzt wird. Infolge der relativ hohen Last tritt in den Schraubspindelgetrieben Gewindeverschleiß auf, selbst wenn sie im Ölbad laufen. Der Gewindeverschleiß konzentriert sich auf das Innengewinde der Spindelmutter, in welcher die Gewindegänge unter der Last reiben und ausbrechen. Um dies zu vermeiden, wird bisher in regelmäßigen Abständen der Gewindeverschleiß überprüft, wofür das Spindelgetriebe auseinander zu bauen ist. Dies ist arbeitsaufwendig und bedingt unerwünschte Stillstandszeiten.

Der Erfindung liegt die Aufgabe zugrunde, ein Schraubspindelgetriebe sowie eine Trub-Hackmaschine anzugeben, bei denen fortschreitender Gewindeverschleiß ohne Demontage des Schraubspindelgetriebes bequem feststellbar ist.

Die gestellte Aufgabe wird mit den Merkmalen des Anspruchs 1 und des Anspruchs 7 gelöst.

Der baulich in das Schraubspindelgetriebe integrierte Gewindeverschleiß-Anzeigemechanismus lässt bequem jederzeit die Überprüfung fortschreitenden Gewindeverschleißes ohne Demontage des Schraubspindelgetriebes zu. Der zumindest optisch ablesbare Gewindeverschleiß-Anzeigemechanismus vermeidet unerwünschte Stillstandszeiten zur Demontage des Schraubspindelgetriebes auf verschiedenen Gebieten der Technik, und ist besonders vorteilhaft bei Läuterbottich-Aufhackmaschine, die zur Überprüfung des Gewindeverschleißes und zur Abkehr von Schäden ohne teure Stillstandszeiten bequem jederzeit hinsichtlich fortschreitenden Gewindeverschleißes inspizierbar sind.

Zweckmäßig ist der Gewindeverschleiß-Anzeigemechanismus so ausgebildet, dass er sich automatisch mit der Spindelmutter auf der Gewindespindel verstellt. Dadurch lässt sich eine Inspektion praktisch in jeder Stellung der Spindelmutter durchführen, weil auftretender Gewindeverschleiß, insbesondere wenn er sich auf das Innengewinde der Spindelmutter zweckmäßig unter der Voraussetzung eines Lastzustandes mit korrekt tragenden Gewindegängen.

Der Gewindeverschleiß wird ohne Zerlegen des Schraubspindelgetriebes optisch angezeigt oder messbar dargestellt, wenn an der Spindelmutter und an der Schraubspindel jeweils wenigstens ein Anzeigelement fest angebracht ist, das von außerhalb der Spindelmutter sichtbar ist, wobei die Anzeigeelemente örtlich einander so zugeordnet sind, dass aus einer Änderung ihrer ursprünglichen gegenseitigen Zuordnung aufgetretener Gewindeverschleiß ablesbar ist. Dabei ist es zweckmäßig, entweder im verschleißfreien Zustand oder im Zustand eines gerade noch tolerierbaren Gewindeverschleißes eine bestimmte, deutlich erkennbare örtliche Zuordnung zwischen den Anzeigeelementen vorzubestimmen. Das Ausmaß des Gewindeverschleiß lässt sich an den Anzeigelementen mit freiem Auge abschätzen und ist anhand des Axialabstandes zwischen den Anzeigeelementen genau messbar, z.B. mit einer Spaltlehre oder dgl. Das Anzeigeelement der Spindelmutter verlagert sozusagen eine Referenzposition des Innengewindes der Spindelmutter nach außen, wo diese Referenzposition sichtbar ist, und ordnet diese Referenzposition dem Anzeigeelement an der Schraubspindel so zu, dass gewindeverschleißbedingte Änderungen des Axialabstandes sichtbar und/oder von außen messbar sind, ohne die Spindelmutter von der Gewindespindel abnehmen zu müssen.

Baulich einfach ist das Anzeigeelement der Spindelmutter eine Sichtkante, die der Gewindesteigung folgt, während das Anzeigeelement der Schraubspindel eine markante, ebenfalls der Gewindesteigung folgende und sichtbare Kante der Außengewindestruktur ist. Die Sichtkante der Spindelmutter kann innerhalb der Spindelmutter oder an dieser vorgesehen sein, es ist aber auch denkbar, sie über einen Ausleger axial versetzt zur Spindelmutter zu positionieren und auf die markante Kante der Außengewindestruktur auszurichten. Gegebenenfalls dient als Sichtkante eine Zeigerspitze oder eine Markierung, z.B. an der Stirnseite der Spindelmutter, wobei die Zeigerspitze oder die Markierung in verschleißfreiem Zustand des Schraubspindelgetriebes in einer vorbestimmten örtlichen Zuordnung zu einer markanten Kante des Außengewindes der Schraubspindel positioniert ist, so dass das Ausmaß des aufgetretenen Gewindeverschleißes sichtbar wird, sobald die Zuordnung nicht mehr gegeben ist.

Bei einer einfachen Ausführungsform dient als Sichtkante des Gewindeverschleiß-Anzeigemechanismus zumindest ein Umfangsabschnitt des Übergangs von der Gangflanke in den Gewindegrund des Innengewindes, wobei der Übergang durch eine Ausnehmung in der Stirnseite der Spindelmutter sichtbar freigelegt ist und die Sichtkante in einer deutlich ablesbaren oder messbaren örtlichen Zuordnung (z.B. mit dem Gewindespiel) bei einer markanten Kante der Außengewindestruktur positioniert ist.

Gewindeverschleiß lässt sich mit dem Gewindeverschleiß-Anzeigemechanismus gut messbar und deutlich sichtbar bei einem Trapezgewinde abbilden, da ein Trapezgewinde sehr markante Kanten, einen relativ breiten Kamm und Grund hat, so dass beispielsweise die verschleißbedingte Verstellung der Sichtkante aus einer anfänglichen Ausrichtung auf eine Kante des Kammes des Außengewindes bis innerhalb der Breite des Kammes das axiale Ausmaß des Gewindeverschleißes deutlich abbildet.

In der Läuterbottich-Aufhackmaschine ist über die Inspektionsöffnung jederzeit die axiale Relativposition zwischen der Sichtkante an der Spindelmutter und dem Außengewinde oder einer markanten Kante der Außengewindestruktur optisch oder mittels einer Spaltlehre überprüfbar, ohne das Schraubspindelgetriebe demontieren zu müssen. Die Sichtkante macht sozusagen das von außen an sich nicht sichtbare Innengewinde der Spindelmutter sichtbar und zeigt die Relativlage der ineinander greifenden Innen- und Außengewinde, was nach Veränderungen Aufschluss über das Ausmaß aufgetretenen Gewindeverschleißes gibt.

Zweckmäßig ist die Inspektionsöffnung durch ein Schauglas abgedeckt, so dass eine präventive Überprüfung aufgetretenen Gewindeverschleiß mit freiem Auge, gegebenenfalls unter Zuhilfenahme einer Lichtquelle, jederzeit möglich ist. Da im Regelfall ein Schraubspindelgetriebe im Ölbad arbeitet, das Öl verschmutzt und den Einblick versperrt, ist es zweckmäßig, die Inspektionsöffnung durch einen abnehmbaren Deckel zu verschließen und eine Ölablassvorrichtung vorzusehen, so dass nach Ablassen des Öls direkter Einblick auf den Gewindeverschleiß-Anzeigemechanismus genommen oder gemessen werden kann, z.B. mit einer Messlehre oder einem Endoskop.

Gewindeverschleiß im Schraubspindelgetriebe der Läuterbottich-Aufhackmaschine lässt sich besonders gut abbilden, wenn, wie häufig der Fall, ein Trapezgewinde verwendet wird, weil Trapezgewinde sehr markante Kanten haben, die die optische Inspektion bzw. einen Messvorgang begünstigen. Eine bequeme Ablesung oder Messung ist möglich, wenn im verschleißfreien Zustand der Übergang von der Gangflanke in den Ganggrund des Innengewindes der Spindelmutter in radialer Richtung im Wesentlichen mit der Begrenzungskante des Kammes des Außengewindeganges der Schraubspindel übereinstimmt, z.B. nur getrennt durch das axiale Gewindespiel. Greift dann später die Sichtkante, d.h. der Übergang von der Gangflanke in den Ganggrund des Innengewindes, weiter über den Kamm des Ganges des Außengewindes als im Ausgangszustand, dann ist das gewachsene axiale Gewindespiel ein deutliches Indiz für Gewindeverschleiß und sogar das axiale Ausmaß des Gewindeverschleißes. Diese Ausführungsform des Gewindeverschleiß-Anzeigemechanismus ist herstellungstechnisch einfach, weil diese Zusatzfunktion keine nennenswerten baulichen Modifikationen bewährter konstruktiver Ausbildungen erfordert. In der Aufhackmaschine lässt sich der Anzeigemechanismus ohne Zerlegen des Schraubspindelgetriebes, d.h. im Betriebszustand, mit freiem Auge oder beispielsweise einem Endoskop ablesen bzw. der Verschleiß mit einer eingeführten Messlehre messen und auswerten (noch zulässig, oder nicht).

Der bei den vorerwähnten Ausführungsformen realisierte Gewindeverschleiß-Anzeigemechanismus ist baulich einfach und mechanischer Natur. Alternativ könnte auch in die Spindelmutter eine radiale Öffnung eingeformt werden, in der die Sichtkante des Innengewindes sichtbar dem Außengewinde zugeordnet und inspizierbar ist, oder könnte auch eine elektronische Vorrichtung benutzt werden, um den aus dem Gewindeverschleiß beim Lastzustand auftretenden Axialversatz bzw. das vergrößerte Gewindespiel abzutasten und eine Meldung zu liefern, sobald der Versatz ein kritisches Ausmaß erreicht.

Anhand der Zeichnung wird eine Ausführungsform des Erfindungsgegenstandes erläutert. Es zeigen:
- Fig. 1: eine Seitenansicht eines Teils eines Schraubspindelgetriebes, in einem Lastzustand und ohne Gewindeverschleiß,
- Fig. 2: das Schraubspindelgetriebe von Fig. 1 bei Gewindeverschleiß,
- Fig. 3: eine Stirnansicht der Spindelmutter des Schraubspindelgetriebes der Fig. 1 und 2, ohne die Schraubspindel, und
- Fig. 4: schematisch einen Teil einer Läuterbottich-Aufhackmaschine, teilweise im Axialschnitt, mit einem Schraubspindelgetriebe der in den Fig. 1 und 3 angedeuteten Art, wobei in der linken Hälfte der Schnittdarstellung die Spindelmutter eine tiefe Position, in der rechten Hälfte hingegen eine angehobene Position einnimmt.

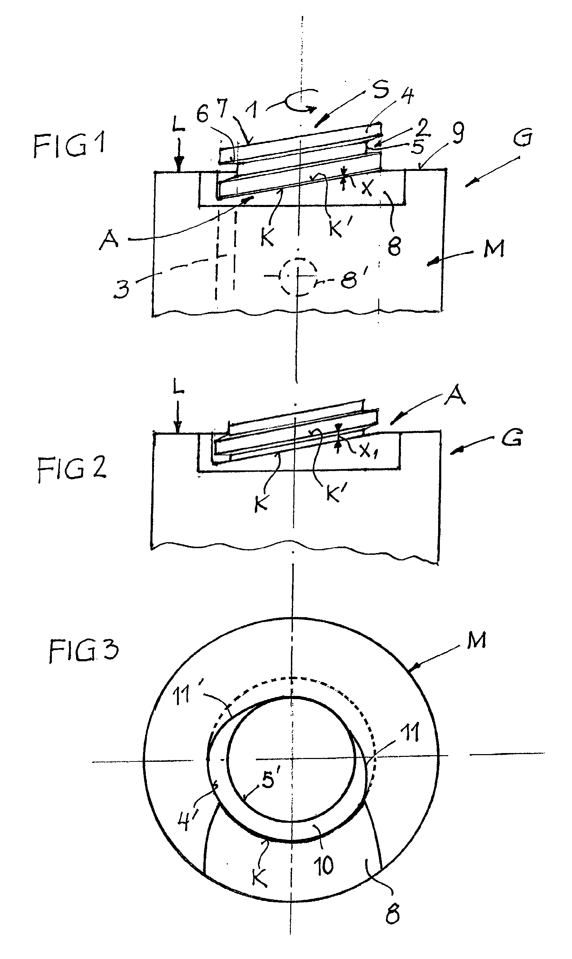

Ein in den Fig. 1 und 2 schematisch angedeutetes Schraubspindelgetriebe G weist als Hauptkomponenten eine Schraubspindel S und eine Spindelmutter M auf. Durch eine relative Drehbewegung (Pfeil 1) zwischen diesen Komponenten ist entweder die Spindelmutter M in axialer Richtung auf der Schraubspindel S verlagerbar, oder umgekehrt die Schraubspindel S relativ zur Spindelmutter M verstellbar. Im vorliegenden Fall sein angenommen, dass die relative Drehbewegung (Pfeil 1) durch Rotieren der Schraubspindel S erzeugt wird, und die am Mitdrehen gehinderte Spindelmutter M abhängig von der Drehrichtung entlang der Schraubspindel S verfährt.

Bei der gezeigten Ausführungsform ist direkter Gewindeeingriff mit einem Gewindespiel zwischen den beiden Komponenten vorgesehen, d.h. die Schraubspindel S besitzt ein Außengewinde 2 passend zu einem Innengewinde 3 der Spindelmutter M. Alternativ können zwischen diesen beiden Komponenten Wälzkörper (nicht gezeigt) vorgesehen sein, die sich entlang wenigstens einer gewindeartigen Führungsbahn an der Schraubspindel S und/oder in der Spindelmutter M bewegen.

Der Schraubspindelantrieb G ist mit einem baulich integrierten Gewindeverschleiß-Anzeigemechanismus M versehen, mit dem Gewindeverschleiß abzulesen oder zu messen ist. Zu diesem Zweck sind an der Spindelmutter M eine der Gewindesteigung folgende von außen sichtbare Sichtkante K als der Spindelmutter M angehörendes Anzeigeelement und eine örtlich der Sichtkante K zugeordnete Kante K', die ebenfalls der Gewindesteigung folgt, als Anzeigeelement an der Schraubspindel S vorgesehen. Der Axialabstand in Fig. 1 (zwischen der Sichtkante K und der Kante K') ist eine sichtbare oder messbare Anzeige für Gewindeverschleiß. In Fig. 1 ist im Schraubspindelgetriebe G noch kein nennenswerter Gewindeverschleiß vorhanden (Axialabstand x entsprechend z.B. dem axialen Gewindespiel). Die Sichtkante K deckt sich in etwa mit der Kante K' oder liegt ihr mit dem axialen Abstand x gegenüber. Der Abstand ist in Blickrichtung radial auf die Achse der Schraubspindel S zu sehen oder zu messen. In Fig. 2 ist Gewindeverschleiß eingetreten. Unter der Annahme, dass ein Lastzustand im Schraubspindelgetriebe G vorhanden ist, und zwar mit einer bestimmten Lastrichtung L, in der Zeichnung nach unten, steht aufgrund des aufgetretenen Gewindeverschleißes in Fig. 2 die Sichtkante K mit einem deutlich größeren axialen Abstand x1 vor der Kante K'. Das axiale Gewindespiel hat sich sichtbar und messbar vergrößert.

Das Außengewinde 2 der Schraubspindel S ist hier ein Trapezgewinde, (z.B. eingängiges Trapezgewinde, obwohl auch mehrgängige Gewinde möglich sind) mit einem relativ breiten Gangkamm 4, der durch markante Kanten 6, 7 begrenzt ist und einem relativ breiten, ebenen Ganggrund 5, der in den Übergängen in die Gangflanken ebenfalls markante Kanten zeigt. Als die der Sichtkante K der Spindelmutter M örtlich zugeordnete Kante K' wird hier beispielsweise die untere Kante 6 des Gangkamms 4 benutzt.

Die Sichtkante K der Spindelmutter M ist in einer an einer Stirnseite 9 geformten Ausnehmung 8 freigelegt, d.h. dass zumindest ein Umfangsabschnitt (Fig. 3) des Übergangs vom Ganggrund 4' des Innengewindes 3 in eine im Lastzustand tragende Gangflanke 10 sichtbar ist. Die Sichtkante K braucht nicht notwendigerweise exakt der Übergang vom Ganggrund 4' in die Gangflanke 10 zu sein, sondern könnte auch durch stärkere Abtragung innerhalb des Ganggrundes 4' liegen. In Fig. 3 verdeutlicht die Bezugsziffer 10 den Gewindeanfang vom Innengewinde-Gangkamm 5' in den Ganggrund 4' an der Stirnseite 9 der Spindelmutter M, während die Bezugziffer 11' die Verschneidungslinie zwischen der Stirnseite 9 und dem Innengewinde-Gangkamm 5 andeutet.

Alternativ würde es ausreichen, nur wenigstens einen Punkt der Sichtkante K in Fig. 1 freizulegen, so dass dieser Punkt wie eine Zeigerspitze örtlich auf die Kante K' ausgerichtet ist (bei radialer Blickrichtung). Als weitere Alternative könnte die Spindelmutter M mit einem axialen Fortsatz verlängert sein, an dem die Sichtkante K oder zumindest eine Zeigerspitze in örtlicher Zuordnung (mit dem Gewindespiel) beispielsweise zu der Kante K' des Außengewindes 2 der Schraubspindel S angeordnet ist, um die aus einem Gewindeverschleiß unter Last L auftretende relative axiale Verstellung der Sichtkante K bzw. des wenigstens einen Punktes der Sichtkante K relativ zur Kante K' ablesen zu lassen.

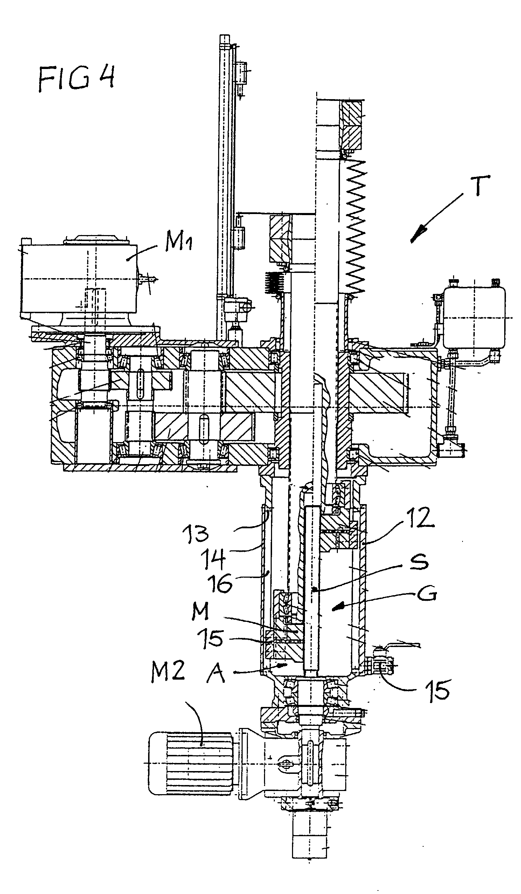

In der Schnittdarstellung der Fig. 4 einer der Übersichtlichkeit halber nur mit ihren Hauptkomponenten dargestellten Läuterbottich-Aufhackmaschine T dient ein Motor M1 als Drehantrieb für nicht dargestellte Lockerungsorgane, mit denen abgelagerte Treber durch eine langsame Rotationsbewegung aufgelockert werden. Ein zweiter Antriebsmotor M2 dient zur Höheneinstellung der Lockerungsorgane mit einem Schraubspindelgetriebe G, dessen Schraubspindel S durch den Antriebsmotor M2 in der einen oder der anderen Drehrichtung angetrieben wird, um die die Lockerungsorgane tragende Spindelmutter M auf- oder abzuverfahren. Das Schraubspindelgetriebe G, beispielsweise ausgebildet entsprechend den Fig. 1 bis 3, ist mit dem integrierten Gewindeverschleiß-Anzeigemechanismus A zwischen der Spindelmutter M und der Schraubspindel S ausgestattet.

Das Schraubspindelgetriebe G ist in einem rohrförmigen Gehäuse 12 in einem Ölbad untergebracht. Die Spindelmutter M ist mit Federn 15 versehen, die in Führungsnuten 16 axial geführt werden, so dass die Spindelmutter M drehfest und axial verstellbar abgestützt ist. Eine Inspektionsöffnung 13 im Gehäuse 12 wird durch einen abnehmbaren Deckel 14 verschlossen, vorzugsweise ein Schauglas, um den Gewindeverschleiß-Anzeigemechanismus M optisch und ohne Demontage des Schraubspindelgetriebes G inspizieren zu können. Für den Fall, dass das Ölbad zu trübe für eine visuelle Inspektion ist, ist eine Ölablassvorrichtung 15 vorgesehen, zweckmäßigerweise ein Ölablasshahn um unteren Bereich des Gehäuses 12, um den Gewindeverschleiß-Anzeigemechanismus M freilegen zu können. Nach Abnahme des Deckels 14 lässt sich aufgetretener Gewindeverschleiß beispielsweise durch eine Spaltlehre messen, die in den Zwischenraum zwischen der Sichtkante K und der Kante K' eingeführt wird, oder mit freiem Auge oder einem Endoskop überprüfen und bewerten.

Zum Freilegen der Sichtkante K in den Fig. 1 bis 3 wird die Ausnehmung 8 zweckmäßigerweise in der Stirnseite 9 der Spindelmutter M ausgefräst, und zwar vom Außenumfang der Spindelmutter M bis an den Durchmesser des Ganggrundes 4' in Fig. 3. Durch diese Bearbeitung wird die exakt der Gewindesteigung folgende Sichtkante freigelegt, ohne die Spindelmutter M spürbar zu schwächen oder die Trageigenschaften zu beeinflussen. Zur Formung einer noch präziseren Sichtkante K könnte auch eine in Richtung der Gewindesteigung geführte axiale Bearbeitung der Sichtkante K vorgenommen werden.

Alternativ ist in Fig. 1 eine Ausnehmung 8' beispielsweise in Form einer Radialbohrung dargestellt, deren oberster oder unterster Innenumfangspunkt die Sichtkante K oder zumindest einen Punkt einer solchen Sichtkante bildet. Gegebenenfalls ist dort eine Markierung oder ein Vorsprung nach Art eines Zeigers geformt.

## Patentansprüche

1. Schraubspindelgetriebe (G), insbesondere für eine Läuterbottich-Aufhackmaschine (T), mit einer Spindelmutter (M), die durch eine relative Drehbewegung (1) zwischen der Schraubspindel (S) und der Spindelmutter (M) entlang des Außengewindes (2) der Schraubspindel (S) verstellbar ist, **gekennzeichnet durch** einen in das Schraubspindelgetriebe (G) zwischen der Spindelmutter (M) und der Schraubspindel (S) baulich integrierten Gewindeverschleiß-Anzeigemechanismus (A).

2. Schraubspindelgetriebe nach Anspruch 1, **dadurch gekennzeichnet, dass** der Gewindeverschleiß-Anzeigemechanismus (A) zusammen mit der Spindelmutter (M) auf der Gewindespindel (S) verstellbar ist, vorzugsweise in Axialrichtung und in der Richtung der relativen Drehbewegung.

3. Schraubspindelgetriebe nach Anspruch 1, **dadurch gekennzeichnet, dass** an der Spindelmutter (M) und der Schraubspindel (S) jeweils wenigstens ein von außerhalb der Spindelmutter (M) sichtbar und fest angebrachtes Anzeigeelement vorgesehen ist, und dass die Anzeigeelemente in einem Lastzustand mit vorbestimmter axialer Lastrichtung (L) des Schraubspindelgetriebes (G) in Axialrichtung einander örtlich derart zugeordnet sind, z.B. mit dem axialen Gewindespiel, dass sie sichtbar, vorzugsweise zumindest messbar, gewindeverschleißabhängig relativ zueinander verstellbar sind.

4. Schraubspindelgetriebe nach Anspruch 3, **dadurch gekennzeichnet, dass** das Anzeigeelement der Spindelmutter (M) eine in ihrem Verlauf der Gewindesteigung entsprechende Sichtkante (K) aufweist, und dass das Anzeigeelement der Schraubspindel eine im Außengewinde sichtbare, markante, der Gewindesteigung folgende Kante (K') ist, vorzugsweise an einem Kamm (4) und/oder Grund (5) wenigstens eines Gewindeganges.

5. Schraubspindelgetriebe nach Anspruch 4, **dadurch gekennzeichnet, dass** in wenigstens einer Stirnseite (9) der Spindelmutter (M) in einem Umfangssegment eine vom Außenumfang bis an den Gewindegrund (4') des Innengewindes (3) reichende Ausnehmung (8) geformt ist, innerhalb derer der freigelegte Übergang von der Gangflanke (10) in den Gewindegrund (4') die Sichtkante (K) definiert.

6. Schraubspindelgetriebe nach Anspruch 5, **dadurch gekennzeichnet, dass** das Gewinde ein Trapezgewinde mit einem Gewindegrund (5, 4') definierter Weite, einem kantigen Übergang vom Gewindegrund (5, 4') in die Gangflanke (10), einem zumindest weitgehend ebenen Kamm (4, 5') definierter Weite, und den Kamm (4) begrenzenden Kanten (6, 7) ist, von denen eine Kante (6) als die örtlich, z.B. mit dem Gewindespiel bei verschließfreien Gewinden, der Sichtkante (K) zugeordnete Kante (K') ausgewählt ist.

7. Läuterbottich-Aufhackmaschine (M) mit einem Schraubspindelgetriebe (G), mit dem zwischen einer Spindelmutter (M) und einer ein Außengewinde aufweisenden Schraubspindel (S) durch Relatiwerdrehung (1) axiale Lastverstellbewegungen durchführbar sind, **dadurch gekennzeichnet, dass** in das Schraubspindelgetriebe (G) ein ohne Demontage des Schraubspindelgetriebes (G) zumindest optisch inspizierbarer, selbsttätiger Gewindeverschleiß-Anzeigemechanismus (A) baulich eingegliedert ist.

8. Läuterbottich-Aufhackmaschine nach Anspruch 7, **dadurch gekennzeichnet, dass** der Gewindeverschleiß-Anzeigemechanismus (M) eine vom Innengewinde (3) der Spindelmutter (M) zur Ansicht von außen freigelegte, der Gewindesteigung folgende Sichtkante (K) aufweist, die dem Außengewinde oder einer markanten Kante (K') des Außengewindes der Schraubspindel (S) örtlich zugeordnet ist, und dass in einem Gehäuse (12) des Schraubspindelgetriebes (G) eine auf den Gewindeverschleiß-Anzeigemechanismus (M) ausgerichtete Inspektionsöffnung (13) vorgesehen ist.

9. Läuterbottich-Aufhackmaschine nach Anspruch 8, **dadurch gekennzeichnet, dass** die Inspektionsöffnung (13) durch einen abnehmbaren Deckel (14), vorzugsweise ein Schauglas, verschlossen ist, und dass das Gehäuse (12) eine Ölablassvorrichtung (15) aufweist.

10. Läuterbottich-Aufhackmaschine nach wenigstens einem der Ansprüche 7 bis 9, **dadurch gekennzeichnet, dass** die Spindelmutter (M) und die Schraubspindel (S) Trapezgewinde aufweisen, und dass die Dichtkante (K) zumindest ein Umfangsabschnitt des Gewindegrundes (4') des Innengewindes (3) ist, dessen axiale Relativposition gegenüber einer markanten Kante (K') des Außengewindes der Schraubspindel (S) in einem Lastzustand des Schraubspindelgetriebes (G) den Gewindeverschleiß (x1) repräsentiert.
